# EUROPÄISCHE PATENTSCHRIFT

(11) **EP 1 692 058 B1**
(45) Veröffentlichungstag und Bekanntmachung des Hinweises auf die Patenterteilung: **19.03.2008**
(21) Anmeldenummer: 04803676.8
(22) Anmeldetag: 09.12.2004
(51) Int. Cl.: B65G 1/14

(54) **STAPELSÄULE**
STACKING PILLAR
COLONNE D'EMPILAGE

(30) Priorität: 10.12.2003 DE 10358151
(43) Veröffentlichungstag der Anmeldung: 23.08.2006
(73) Patentinhaber: MTS Maschinenbau GmbH, 88512 Mengen (DE)
(72) Erfinder: STROBEL, Gustav, 88348 Bad Saulgau (DE)
(74) Vertreter: Weiss, Peter
(86) Internationale Anmeldenummer: PCT/EP2004/014019
(87) Internationale Veröffentlichungsnummer: WO 2005/056436

(56) Entgegenhaltungen:
- DE-A1- 3 619 688
- DE-A1- 3 808 338

## Beschreibung

Die vorliegende Erfindung betrifft eine Stapelsäule mit zwei Seitenwangen und zwischen diesen angeordneten Klinken, welche um einen Achsbolzen von einer Ruhelage in eine Arbeitslage drehen.

### STAND DER TECHNIK

Stapelsäulen sind in vielfältiger Form und Ausführung bekannt und auf dem Markt. Verwendet werden Stapelsäulen vor allem bei der Herstellung von Karosserieteilen in der Automobilindustrie. Die entsprechenden Karosserieteile werden über Roboter aus den Pressen genommen und vor einer Weiterverarbeitung in Stapelsäulen zwischengelagert.

In der Regel sind vier Stapelsäulen im Rechteck aufgestellt. Jede Stapelsäule besitzt eine Vielzahl von Klinken, die übereinander angeordnet sind. Eine erste Klinke befindet sich in Bereitschaftsstellung. Wird ein Lagergut auf diese Klinke aufgelegt, schwenkt die Klinke in Arbeitsstellung und nimmt dabei eine nachfolgende Klinke mit, die auf diese Weise in Bereitschaftsstellung gelangt. Eine derartige Stapelsäule ist beispielsweise aus der DE 38 11 310 C1 bekannt.

Stapelsäulen werden aber auch zur horizontalen Lagerung von Lagergütern verwendet, wie dies beispielsweise in der DE 40 20 864 A1 beschrieben ist. Die Funktionsweise dieser horizontalen Stapelsäulen ähnelt derjenigen der vertikalen Stapelsäulen.

Eine weitere Stapelsäule wird in der DE 36 19 688 A1 beschrieben, welche zum Stapeln von Lagergütern annähernd gleicher Form und Grösse in gegenseitigen Abständen übereinander mit an der Säule übereinander um horizontale Achsen drehbar gelagerten, zweiarmigen Klinkenhebeln und einer, dem obersten Klinkenhebel zugeordneten Sperrklinke, die durch ein Betätigungsglied zwischen einer Verriegelungs- und einer Ruhelage hin- und herbeweglich ist, dient, wobei die Sperrklinke mit einem ebenfalls vom Betätigungsglied bewegbaren Halteelement verbunden ist, das in Ruhelager der Sperrklinke in die Stapelsäule zurückgezogen ist und in Verriegelungslage der Klinke im Abstand über dem obersten Klinkenhebel liegt, so dass ein auf diesem Hebel liegendes Lagergut an einer Bewegung nach oben vom Klinkenhebel weg gehindert ist.

### AUFGABE

Aufgabe der vorliegenden Erfindung ist es, die Montage von Stapelsäulen, : insbesondere mit kleiner Teilung, zu vereinfachen und ihre Handhabung auch in beladenem Zustand, sicherer zu gestalten.

### LÖSUNG DER AUFGABE

Zur Lösung dieser Aufgabe führt, dass zumindest ein Teil der Klinken eine Achsbölzenaufnahme aufweist, welche bogenartig gekrümmt den Achsbolzen nur teilweise umfasst.

Damit ist es nun möglich, zuerst den Achsbolzen zwischen den beiden Seitenwangen festzulegen und erst dann auf den Achsbolzen die Klinke von der Seite her aufzustecken. Es ist nicht mehr notwendig, mühevoll mit dem Achsbolzen sowohl die Axialbohrung in der Klinke als auch die Lagerbohrung in der gegenüberliegenden Seitenwange zu suchen. Hierdurch wird die Montage wesentlich vereinfacht.

Gemäss der neuen Erfindung dient der Achsbolzen auch dazu, benachbarte Klinken festzulegen. Zu diesem Zweck halten zwei benachbarte Achsbolzen einen Abstand voneinander ein, der geringfügig grösser als eine Materialstärke der Klinke im Bereich der Achsbolzenaufnahme ist. Hierdurch ist es für den Achsbolzen nicht möglich, aus der Achsbolzenaufnahme zu rutschen, dennoch ist aber die Schwenkbarkeit der Klinke um den Achsbolzen gewährleistet.

Mit dieser Anordnung ist es gleichzeitig möglich, eine andere Teilung zu wählen. Beispielsweise genügt es, den Durchmesser der Achsbolzen und der Achsbolzenaufnahme grösser auszugestalten, wodurch auch der Abstand zwischen zwei Achsbolzen vergrössert werden muss, was zu einer grösseren Teilung führt.

Bevorzugt soll die Klinke einstückig, beispielsweise aus einem Blech oder Kunststoffstreifen bestehen. In diesem Fall bildet die Klinke einerseits der Achsbotzenaufnahme ein Tragteil für den zu haltenden Gegenstand aus und andererseits ist ihr ein Mitnehmer zugeordnet. Dieser kann eine beliebige Ausgestaltung aufweisen. Beispielsweise genügt ein Vorsprung, der beim Schwenken der Klinke die nachfolgende Klinke angreift und diese in Bereitschaftsstellung bringt. Wie dieser Mitnehmer ausgestaltet ist und wo er an der Klinke vorgesehen wird, ist von untergeordneter Bedeutung. Aus Platzgründen dürfte es sich als ratsam erweisen, die Mitnehmer alternierend sich gegenüberliegend nahe den Seitenwangen vorzusehen.

Ebenfalls von untergeordneter Bedeutung ist, ob das Tragteil gerade von der Achsbolzenaufnahme abragt oder gekröpft ausgebildet ist.

Weiterhin ist den Klinken eine Verriegelungseinrichtung zugeordnet, welche zumindest einen Teil, bevorzugt aber alle Klinken in Arbeitslage festlegt. Diese Verriegelungseinrichtung kann beliebig ausgestaltet sein.

In einem bevorzugten Ausführungsbeispiel der Erfindung ist Teil der Verriegelungseinrichtung eine Leiste, welche in einem Ausschnitt, der in die Klinken eingeformt ist, bewegbar ist. In Verriegelungslage soll diese Leiste einen oberen Teil des Ausschnitts untergreifen und so festlegen. Dabei ist der obere Teil des. Ausschnitts bevorzugt flächig ausgebildet, damit die Leiste eine grössere Anlagefläche hat.

Möglich ist auch die Anformung von Vorsprüngen an die Klinken ohne Ausbildung von Ausschnitten. In diesem Fall wird die Leiste entlang den Klinken bis zu den Vorsprüngen bewegt und untergreift diese.

Die Bewegung-der Leiste wird durch ein sich parallelogrammartig bewegendes Hebelgestänge bewirkt. Jedoch sind hier auch andere Ausgestaltungen möglich und sollen vom Erfindungsgedanken umfasst sein.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Figur 1: eine Seitenansicht einer erfindungsgemässen Stapelsäule in horizontaler Lage;.
- Figur 2: eine Draufsicht auf die Stapelsäule gemäss Figur 1;
- Figur 3: eine perspektivische Ansicht der Stapelsäule gemäss Figur 1;
- Figur 4: eine perspektivische Ansicht eines Klinkenpaketes;
- Figur 5: eine perspektivische Ansicht einer Klinke;
- Figur 6: einen vergrössert dargestellten Querschnitt durch einen Teil der Klinke gemäss Figur 5;
- Figur 7: eine perspektivische Ansicht einer Verriegelungseinrichtung.

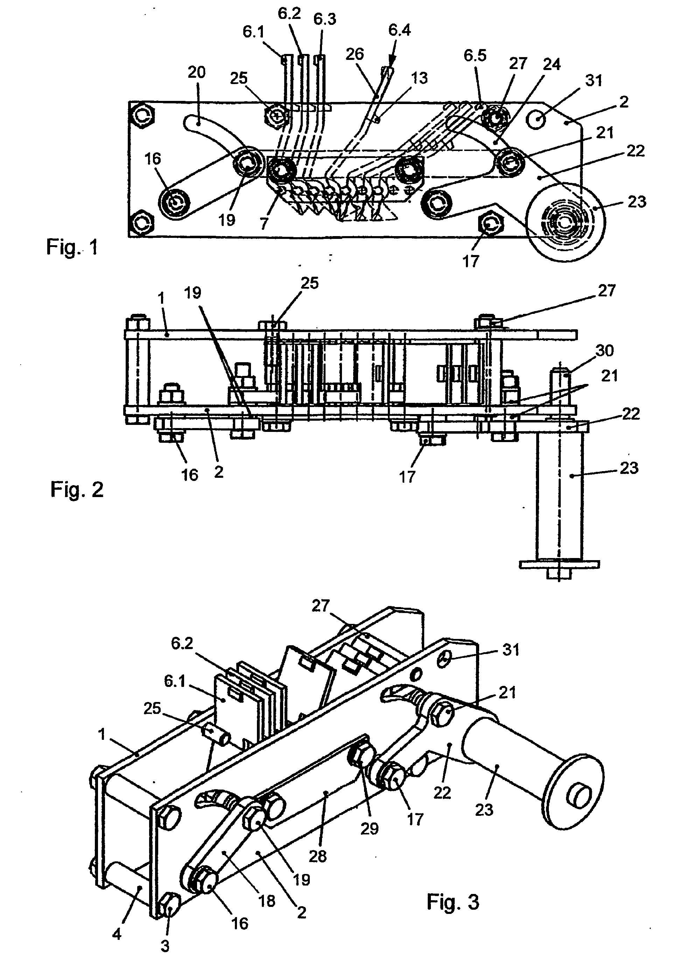

Eine erfindungsgemässe Stapelsäule gemäss den Figuren 1 bis 3 ist in horizontaler Lage dargestellt. Sie kann als horizontale oder aber auch als vertikale Stapelsäule verwendet werden.

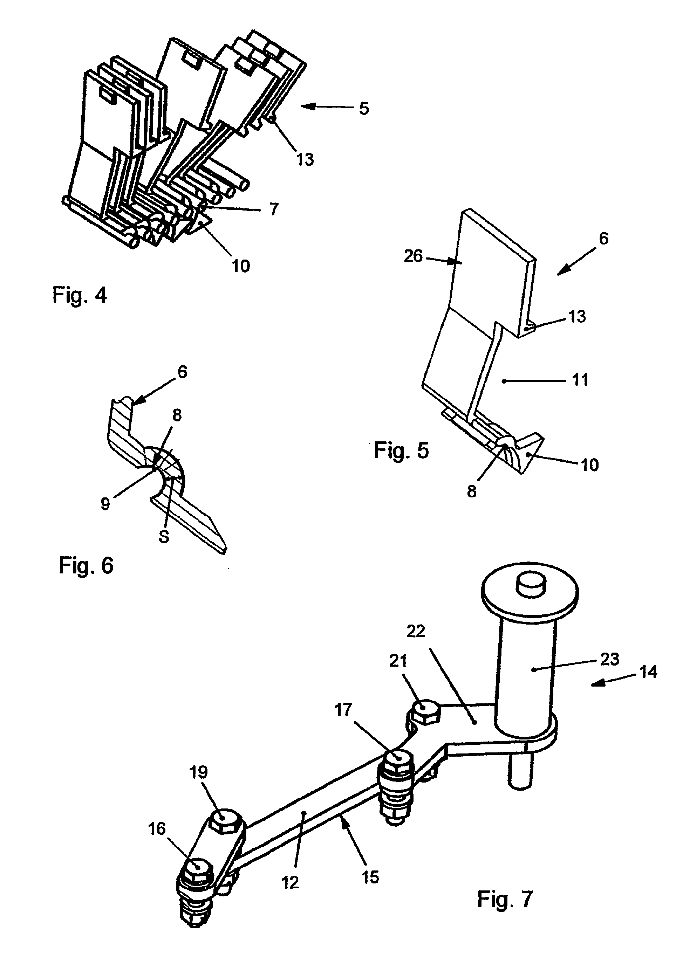

Die Stapelsäule weist zwei Seitenwangen 1 und 2 auf, welche über Verbindungsbolzen 3 mit entsprechenden Abstandshülsen 4 miteinander verbunden sind. Zwischen den Seitenwangen 1 und 2 befindet sich ein Klinkenpaket 5, welches in Figur 4 näher gezeigt ist. Das Klinkenpaket 5 besteht aus einzelnen Klinken 6, von denen eine in Figur 5 vergrössert dargestellt ist: Jede Klinke 6 dreht um einen Achsbolzen 7, wobei dieser Achsbolzen 7 von einer in Figur 6 näher gezeigten Achsbolzenaufnahme 8 teilweise umfasst ist. Die Achsbolzenaufnahme 8 besitzt eine bogenförmige Innenfläche 9, mit der sie den Achsbolzen zumindest teilweise umgreift. Ferner weist die Klinke 6 im Bereich der Achsbolzenaufnahme 8 eine Materialstärke s auf.

Insbesondere in Figur 5 ist unterhalb der Achsbolzenaufnahme 8 ein Mitnehmer 10 erkennbar, durch den eine nachfolgende Klinke, wie später beschrieben, von einer Ruhelage in eine Bereitschaftsstellung gebracht werden kann.

Ferner folgt auf die Achsbolzenaufnahme 8 ein Ausschnitt 11, der zu einer Verringerung der Breite der Klinke 6 führt. In diesem Ausschnitt 11 bewegt sich eine in Figur 7 erkennbare Leiste 12. Der Ausschnitt 11 wird nach oben hin von einer Anschlagnase 13 begrenzt, die einen flächigen Anschlag ausbildet.

Die Leiste 12 ist Teil einer Verriegelungseinrichtung 14, die in Figur 7 gezeigt ist. Diese besitzt ein parallelogrammartiges Hebelgestänge 15, das über zwei Schraubenbolzen 16 und 17 ortsfest mit der Seitenwange 2 verbunden ist. Um den Schraubenbolzen 16 dreht ein Hebel 18, der andernends gelenkig über einen Verbindungsbolzen 19 mit der Leiste 12 verbunden ist. Hierzu durchgreift der Verbindungsbolzen 19 ein gekrümmtes Langloch 20 in der Seitenwange 2, wobei der Verbindungsbolzen 19 in dem Langloch 20 geführt ist. Andemends, d.h., im Inneren der Stapelsäule ist der Verbindungsbolzen 19 dann gelenkig mit der Leiste 20 verbunden.

Andernends ist die Leiste 12 über einen weiteren Verbindungsbolzen 21 mit einer dreieckförmigen Schwenklasche 22 verbunden, wobei der Verbindungsbolzen 21 in einer Ecke und der Schraubenbolzen 17 und ein Betätigungshebel 23 in den anderen Ecken sitzen.

Der Verbindungsbolzen 21 ist ebenfalls in einem gekrümmten Langloch 24 geführt, wobei die Verbindung zu der Leiste 12 im Inneren der Stapelsäule und die Verbindung zu der Schwenklasche 22 ausserhalb der Stapelsäule erfolgt.

Die Funktionsweise der vorliegenden Erfindung ist folgende:

Vor dem Einbau der Klinken 6 werden die beiden Seitenwangen 1 und 2 über die Verbindungsbolzen 3 und Abstandshülsen 4 im Abstand zueinander festgelegt. Vor oder nach Montage der Verriegelungseinrichtung 14 werden die Klinken zwischen die beiden Seitenwangen 1 und 2 eingesetzt und die jeweiligen Achsbolzen 7 durch entsprechende Bohrungen in der Seitenwange 2 durchgesteckt, wobei sie in Sacklochbohrungen in der Seitenwange 1 eingreifen. Danach wird eine Platte 28 auf die Achsbolzen 7 bzw. auf die Seitenwange 2 im Bereich der Achsbolzen 7 aufgesetzt und durch Schrauben 29 festgelegt.

Gemäss Figur 1 befinden sich die drei Klinken 6.1, 6.2 und 6.3 bereits in Arbeitsstellung, d.h., sie halten einen nicht näher gezeigten Gegenstand, beispielsweise ein Karrosseriebauteil zwischen sich. Dabei schlägt die erste Klinke 6.1 an einem Anschlag 25 an und kann nicht weiter nach links bewegt werden.

Die Klinke 6.3 hat mit ihrem Mitnehmer 10 bereits eine nachfolgende Klinke 6.4 in Bereitstellung gebracht, so dass ein Tragteil 26 dieser Klinke aus dem Bereich zwischen den beiden Seitenwangen 1 und 2 herausschaut und von einem Gegenstand angegriffen werden kann. Die anderen Klinken befinden sich in Ruhelage zwischen den beiden Seitenwangen 1 und 2, wobei die letzte Klinke 6.5 einem weiteren Anschlag 27 anliegt.

Sind alle Klinken 6.1 bis 6.5 in Arbeitsstellung, so wird die Verriegelungseinrichtung 14 betätigt. D.h., der Betätigungshebel 23 wird angegriffen und nach oben geschwenkt. Bei dieser Schwenkbewegung verfahren die Verbindungsbolzen 19 und 21 in den jeweiligen Langlöchern 20 und 24 und nehmen dabei die Leiste 12 mit. Diese Leiste 12 fährt in den Ausschnitten 11 in den Klinken nach oben und untergreift in Endlage die Anschlagnasen 13, so dass die Klinken nicht aus ihrer Arbeitslage gelangen können. Dies kann erst geschehen, wenn die Verriegelungseinrichtung 14 wieder in die in Figur 3 gezeigte Freigabelage gebracht wird.

Der Festlegung des Hebelgestänges 15 in Verriegelungslage dient ein Bolzen 30 (siehe Figur 2), der über den Betätigungshebel 23 zurückgezogen werden kann. Hierzu befindet sich in dem Betätigungshebel 23 ein entsprechender Federmechanismus. In Verriegelungslage fährt der Bolzen 30 in eine Bohrung 31 in der Seitenwange 2 ein.

### Positionszahlenliste

| | | | | | |
|---|---|---|---|---|---|
| 1 | Seitenwange | 34 | | 67 | |
| 2 | Seitenwange | 35 | | 68 | |
| 3 | Verbindungsbolzen | 36 | | 69 | |
| 4 | Abstandshülse | 37 | | 70 | |
| 5 | Klinkenpaket | 38 | | 71 | |
| 6 | Klinke | 39 | | 72 | |
| 7 | Achsbolzen | 40 | | 73 | |
| 8 | Achsbolzenaufnahme | 41 | | 74 | |
| 9 | Innenfläche | 42 | | 75 | |
| 10 | Mitnehmer | 43 | | 76 | |
| 11 | Ausschnitt | 44 | | 77 | |
| 12 | Leiste | 45 | | 78 | |
| 13 | Anschlagnase | 46 | | 79 | |
| 14 | Verriegelungseinrichtung | 47 | | | |
| 15 | Hebelgestänge | 48 | | | |
| 16 | Schraubenbolzen | 49 | | s | Materialstärke |
| 17 | Schraubenbolzen | 50 | | | |
| 18 | Hebel | 51 | | | |
| 19 | Verbindungsbolzen | 52 | | | |
| 20 | Langloch | 53 | | | |
| 21 | Verbindungsbolzen | 54 | | | |
| 22 | Schwenklasche | 55 | | | |
| 23 | Betätigungshebel | 56 | | | |
| 24 | Langloch | 57 | | | |
| 25 | Anschlag | 58 | | | |
| 26 | Tragteil | 59 | | | |
| 27 | Anschlag | 60 | | | |
| 28 | Platte | 61 | | | |
| 29 | Schraube | 62 | | | |
| 30 | Bolzen | 63 | | | |
| 31 | Bohrung | 64 | | | |
| 32 | | 65 | | | |
| 33 | | 66 | | | |

## Patentansprüche

1. Stapelsäule mit zwei Seitenwangen (1, 2) und zwischen diesen - angeordneten Klinken (6), welche um einen Achsbolzen (7) von einer Ruhelage in eine Arbeitslage drehen,
**dadurch gekennzeichnet,**
**dass** zumindest ein Teil der Klinken (6) eine Achsbolzenaufnahme (8) aufweist, welche bogenartig gekrümmt den Achsbolzen (7) nur teilweise umfasst.

2. Stapelsäule nach Anspruch 1, **dadurch gekennzeichnet, dass** zumindest zwei benachbarte Achsbolzen (7) einen Abstand voneinander einhalten, der geringfügig grösser als eine Materialstärke (s) der Klinke (6) im Bereich der Achsbolzenaufnahme (8) ist.

3. Stapelsäule nach Anspruch 1. oder 2, **dadurch gekennzeichnet, dass** die Klinke (6) einstückig ausgebildet ist.

4. Stapelsäule nach einem der Ansprüche 1 bis 3, **dadurch gekennzeichnet, dass** von der Klinke (6) nach der Achsbolzenaufnahme (8) ein Mitnehmer (10) abragt, der bei Drehung der Klinke (6) um den Achsbolzen (7) eine nachfolgende Klinke angreift und diese in Bereitschaftsstellung bewegt.

5. Stapelsäule - nach Anspruch 4, **dadurch gekennzeichnet, dass** die Mitnehmer (10) von aufeinander folgenden Klinken abwechselnd nahe den sich jeweils gegenüberliegenden Seitenwangen (1,2) angeordnet sind.

6. Stapelsäule nach wenigstens einem der Ansprüche 1 bis 5, **dadurch gekennzeichnet, dass** nach der Achsbolzenaufnahme (8) ein Tragteil (26) vorgesehen, insbesondere abgekröpft ist.

7. Stapelsäule nach Anspruch 6, **dadurch gekennzeichnet, dass** das Tragteil (26) einen Ausschnitt (11) zur Aufnahme oder einen Vorsprung zum Anlegen eines Teils (12) einer Verriegelungseinrichtung (14) aufweist.

8. Stapelsäule nach Anspruch 7, **dadurch gekennzeichnet, dass** von einem oberen Teil des Ausschnitts (11) eine Anschlagnase (13) abragt.

9. Stapelsäule nach Anspruch 7 oder 8, **dadurch gekennzeichnet, dass** die Verriegelungseinrichtung (14) mit einer Leiste (12) sich in dem Ausschnitt (11) der Klinke (6) bewegt.

10. Stapelsäule nach Anspruch 9, **dadurch gekennzeichnet, dass** die Leiste (12) Teil eines sich parallelogrammartig bewegenden Hebelgestänges (15) ist.

## Claims

1. Stacking column having two side walls (1, 2) and, disposed therebetween, ratchets (6) which rotate about a pivot pin (7) from an inoperative position into an operative position, **characterised in that** at least some of the ratchets (6) have a pivot pin receiver (8), which surrounds only partially the pivot pin (7) in an arcuately curved manner.

2. Stacking column according to claim 1, **characterised in that** at least two adjacent pivot pins (7) retain a spacing from each other which is slightly greater than a material thickness (s) of the ratchet (6) in the region of the pivot pin receiver (8).

3. Stacking column according to claim 1 or 2, **characterised in that** the ratchet (6) is configured in one piece.

4. Stacking column according to one of claims 1 to 3, **characterised in that** a coupling means (10) protrudes from the ratchet (6) downstream of the pivot pin receiver (8), which coupling means, when the ratchet (6) rotates about the pivot pin (7), co-operates with a following ratchet and moves said ratchet into a standby position.

5. Stacking column according to claim 4, **characterised in that** the coupling means (10) of successive ratchets are alternately disposed close to the respective oppositely situated side walls (1, 2).

6. Stacking column according to at least one of claims 1 to 5, **characterised in that** a supporting part (26) is provided, more especially bent-down, downstream of the pivot pin receiver (8).

7. Stacking column according to claim 6, **characterised in that** the supporting part (26) has a cutaway portion (11) for the accommodation of a part (12) of a locking arrangement (14), or it has a projection for the abutment of said part (12).

8. Stacking column according to claim 7, **characterised in that** a stop projection (13) protrudes from an upper part of the cutaway portion (11).

9. Stacking column according to claim 7 or 8, **characterised in that** the locking arrangement (14), with a bar (12), moves in the cutaway portion (11) of the ratchet (6).

10. Stacking column according to claim 9, **characterised in that** the bar (12) is part of a lever-type linkage (15), which moves in a parallelogram-like manner.

## Revendications

1. Colonne d'empilage avec deux joues latérales (1, 3) et des poignées (6) disposées entre ces dernières qui pivotent autour d'un boulon d'axe (7) d'une position de repos en une position de travail, **caractérisée par le fait qu'**au moins une partie des poignées (6) présente un dispositif de réception de boulon d'axe (8) qui n'entoure que partiellement le boulon d'axe (7) de manière arquée.

2. Colonne d'empilage selon la revendication 1, **caractérisée par le fait qu'**au moins deux boulons d'axe (7) adjacents respectent une distance entre eux qui est légèrement supérieure à une épaisseur de matériau (s) de la poignée (6) à l'endroit du dispositif de réception de boulon d'axe (8).

3. Colonne d'empilage selon la revendication 1 ou 2, **caractérisée par le fait que** la poignée (6) est réalisée d'une seule pièce.

4. Colonne d'empilage selon l'une des revendications 1 à 3, **caractérisée par le fait que** de la poignée (6) ressort vers le dispositif de réception de boulon d'axe (8) un entraîneur (10) qui, lors de la rotation de la poignée (6) autour du boulon d'axe (7), vient en prise avec une poignée suivante et l'amène en position d'attente.

5. Colonne d'empilage selon la revendication 4, **caractérisée par le fait que** les entraîneurs (10) de poignées successives sont disposés alternativement près des joues latérales (1, 2) chaque fois opposées.

6. Colonne d'empilage selon au moins l'une des revendications 1 à 5, **caractérisée par le fait qu'**après le dispositif de réception de boulon d'axe (8) est prévue, en particulier coudée, une pièce de support (26).

7. Colonne d'empilage selon la revendication 6, **caractérisée par le fait que** la pièce de support (26) présente une découpe (11) destinée à la réception ou une saillie destinée à l'application d'une partie (12) d'un moyen de verrouillage (14).

8. Colonne d'empilage selon la revendication 7, **caractérisée par le fait que** d'une partie supérieure de la découpe (11) ressort un nez de butée (13).

9. Colonne d'empilage selon la revendication 7 ou 8, **caractérisée par le fait que** le moyen de verrouillage (14) avec une moulure (12) se déplace dans la découpe (11) de la poignée (6).

10. Colonne d'empilage selon la revendication 9, **caractérisée par le fait que** la moulure (12) fait partie d'une tringle de levier (15) se déplaçant en forme de parallélogramme.
